# EUROPEAN PATENT APPLICATION

(11) **EP 4 675 771 A1**
(43) Date of publication of application: **07.01.2026**
(21) Application number: 25161100.0
(22) Date of filing: 28.02.2025
(51) Int. Cl.: H01M 50/103, H01M 50/15, H01M 50/342

(54) **SECONDARY BATTERY AND METHOD OF FABRICATING SAME**

(30) Priority: 03.07.2024 KR 20240087710
(71) Applicant: SAMSUNG SDI CO., LTD., Yongin-si, Gyeonggi-do 17084 (KR)
(72) Inventor: KIM, Keeyun, 17084 Yongin-si (KR)
(74) Representative: Marks & Clerk LLP

(57) **Abstract**

Provided are a secondary battery and a method of fabricating the same. The secondary battery and the method of fabricating the same are intended to prevent ignition of the secondary battery. The secondary battery includes an electrode assembly, a can accommodating the electrode assembly, a cap plate coupled to a first side of the can and having a vent hole, and a vent disposed to seal a peripheral portion of the vent hole and including an adhesive portion including an adhesive applied to a portion corresponding to a peripheral portion of the vent hole.

## Description

### BACKGROUND

### 1. FIELD

The present disclosure relates to a secondary battery and a method of fabricating the same.

### 2. Description of Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

As a type of secondary battery, lithium-ion (Li-ion) secondary batteries are widely used. In a case where a Li-ion secondary battery is continuously left or used at high temperatures or charged or discharged with high current, internal gas may be generated due to cell deterioration. The internal gases generated in the Li-ion secondary battery may increase the pressure inside a battery can and damage an internal electrode assembly, thereby causing a risk of ignition. In this regard, various efforts have been made to suppress the melting of internal components in secondary batteries or to prevent ignition caused by damaged internal components.

The above information disclosed in this Background section is for enhancement of understanding of the background of the present disclosure, and therefore, it may contain information that does not constitute related (or prior) art.

### SUMMARY

The present disclosure is intended to provide a secondary battery and a method of fabricating the same, in which ignition of the secondary battery may be prevented.

These and other aspects and features of the present disclosure will be described in or will be apparent from the following description of embodiments of the present disclosure.

According to some embodiments of the present disclosure, a secondary battery includes: an electrode assembly; a can accommodating the electrode assembly; a cap plate coupled to a first side of the can, and having a vent hole; and a vent disposed to seal a peripheral portion of the vent hole, and including an adhesive portion including an adhesive applied to a portion corresponding to the peripheral portion of the vent hole.

According to embodiments, the vent may include a high heat resistant material.

According to embodiments, the vent may include a resin material.

According to embodiments, the resin material may include one of polyimide, polytetrafluoroethylene, polypropylene, polyphenylene sulfide, and mixtures thereof.

According to embodiments, the vent hole may be provided in a central portion of the cap plate.

According to embodiments, the vent hole may have an elliptical shape.

According to embodiments, the adhesive portion may have an annular shape.

According to embodiments, the adhesive may include an acrylic adhesive.

According to embodiments, the vent may have a breaking pressure of 10 kgf/cm² to 30 kgf/cm².

According to embodiments, the vent may have an elliptical shape.

According to embodiments, an area of the vent may be greater than an area of the vent hole.

According to embodiments, the vent may be disposed on an upper end surface of the cap plate surrounding the vent hole.

According to embodiments, the vent hole may include a stepped portion configured to have the adhesive portion of the vent seated thereon.

According to embodiments, the stepped portion may include: a first surface connected to an upper end surface of the cap plate surrounding the vent hole and provided perpendicular to the upper end surface; and a second surface provided parallel to the upper end surface and connected to the first surface.

According to embodiments, the stepped portion may have a shape corresponding to a shape of the vent hole.

According to embodiments, the area of the vent may be smaller than the area of the vent hole.

According to embodiments, an area of the second surface of the stepped portion may be greater than or equal to an area of the adhesive portion of the vent.

According to embodiments, the can may have a prismatic shape.

According to embodiments, a center of the vent may correspond to a center of the vent hole.

According to embodiments of the present disclosure, a method of fabricating a secondary battery includes: preparing an electrode assembly including a first electrode, a second electrode, and a separator; inserting the electrode assembly into a can through an opening provided in a first side of the can; coupling a cap plate having a vent hole to the opening of the can; injecting electrolyte into the can through the vent hole; and sealing the vent hole by connecting a vent having an adhesive portion to which an adhesive is applied to a peripheral portion of the vent hole.

At least some of the above and other features of the invention are set out in the claims.

According to some embodiments of the present disclosure, a secondary battery and a method of fabricating the secondary battery may be provided, in which a can of the secondary battery has therein a vent hole having a structure facilitating the release of internal pressure.

According to some embodiments of the present disclosure, a secondary battery and a method of fabricating the secondary battery may be provided, in which in a case where the internal pressure of the secondary battery rises above a threshold pressure, a vent attached to a vent hole formed in a can of the secondary battery may be easily detached therefrom.

According to some embodiments of the present disclosure, the internal pressure of the secondary battery may cause the vent attached to the vent hole provided in the can to break or be detached, thereby preventing the secondary battery from exploding and igniting.

According to some embodiments of the present disclosure, because electrolyte may be injected through the vent hole formed in the can of the secondary battery before the vent is attached to the vent hole, the process of machining and sealing an inlet may be eliminated, thereby reducing the cost of fabricating the secondary battery.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 illustrates an exploded perspective view showing a secondary battery according to embodiments of the present disclosure;
FIG. 2 illustrates a perspective view showing the secondary battery of FIG. 1 according to embodiments of the present disclosure;
FIG. 3 illustrates a perspective view showing a cap plate in which a vent is disposed according to embodiments of the present disclosure;
FIG. 4 illustrates a perspective view showing a cap plate according to embodiments of the present disclosure;
FIG. 5 illustrates an enlarged perspective view showing part A in FIG. 4;
FIG. 6 illustrates a plan view showing a vent according to embodiments of the present disclosure;
FIG. 7 illustrates a perspective view showing a vent hole having a stepped portion according to embodiments of the present disclosure;
FIG. 8 illustrates a cross-section of the vent hole shown in FIG. 7 taken along line X-X';
FIG. 9 illustrates a perspective view showing a cap plate in which a vent is disposed on a stepped portion of a vent hole according to embodiments of the present disclosure; and
FIG. 10 illustrates a flowchart showing a method of fabricating a secondary battery according to embodiments of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meanings and concepts consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (or under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In the present disclosure, the dimensions and relative sizes of the shown layers and regions may be exaggerated for clarity of description. That is, the dimensions shown in the drawings are for illustrative purposes only and are not intended to be limiting. In addition, throughout the specification, the same reference numerals designate the same elements.

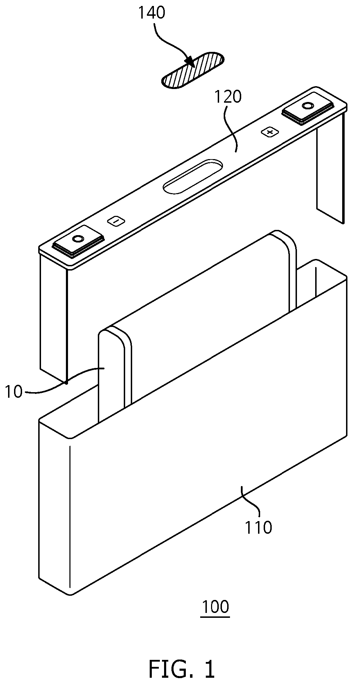

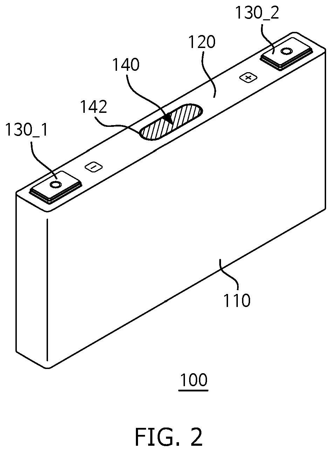

FIG. 1 illustrates an exploded perspective view showing a secondary battery according to embodiments of the present disclosure. FIG. 2 illustrates a perspective view showing the secondary battery according to embodiments of the present disclosure.

Referring to FIGS. 1 and 2, a secondary battery 100 may include: at least one electrode assembly 10 having a bent or stacked structure in which a separator, i.e., an insulator, is provided between a positive electrode and a negative electrode; a can 110 in which the electrode assembly 10 is accommodated, and a cap plate 120 coupled to an open end of the can 110. The secondary battery 100 shown in FIG. 2 may be a prismatic secondary battery, but the secondary battery 100 according to the present disclosure is not limited thereto and may be any of various types of secondary batteries.

Each of the positive electrode and the negative electrode may include a current collector made of a thin metal foil having a coated portion on which an active material is coated and an uncoated portion on which an active material is not coated. The positive electrode and the negative electrode are wound after interposing the separator, which is an insulator, therebetween. However, the present disclosure is not limited thereto, and the electrode assembly may have a structure in which a positive electrode and a negative electrode, each made of a plurality of sheets, are alternately stacked with a separator interposed therebetween.

The secondary battery 100 shown in FIGS. 1 and 2 may be a lithium secondary battery.

A positive electrode for a rechargeable lithium battery may include a current collector and a positive electrode active material layer on the current collector. The positive electrode active material layer may include a positive electrode active material and may further include a binder and/or a conductive material (e.g., an electrically conductive material).

The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The negative electrode for a rechargeable lithium battery may include a current collector and a negative electrode active material layer on the current collector. The negative electrode active material layer may include a negative electrode active material, and may further include a binder and/or a conductive material (e.g., an electrically conductive material).

The electrode assembly 10 may have a positive electrode tab connected to a first side of the positive electrode plate and a negative electrode tab connected to a first side of the negative electrode plate. The positive electrode tab and the negative electrode tab may be electrically connected to a positive electrode terminal 130_1 and a negative electrode terminal 130_2 provided on the cap plate 120.

The can 110 may form the overall outer appearance of the secondary battery 100 and may be made of a conductive metal, such as aluminium, aluminium alloy, or nickel-plated steel. In addition, the can 110 may provide a space in which the electrode assembly 10 is accommodated.

According to some embodiments, the can 110 may be a prismatic can, and the secondary battery 100 may be a prismatic secondary battery. However, the scope of the present disclosure is not limited thereto, and the secondary battery 100 may have any shape such as a prismatic, cylindrical, or pouch shape.

The can 110 may include long side wall portions opposing each other and short side wall portions opposing each other. The long side wall portions may include a first long side wall portion and a second long side wall portion. The first long side wall portion and the second long side wall portion may be opposite each other. The first long side wall portion and the second long side wall portion may be spaced apart from each other while facing each other. The short side wall portions may include a first short side wall portion and a second short side wall portion. The first short side wall portion and the second short side wall portion may be spaced apart from each other while facing each other. The area of each of the first short side wall portion and the second short side wall portion may be smaller than the area of each of the first long side wall portion and the second long side wall portion.

The cap plate 120 may be coupled to an open first end of the can 110, thereby sealing the can 110. The can 110 and the cap plate 120 may be made of a conductive material. According to some embodiments, the upper end of the can 110 may be open, and the cap plate 120 may seal the open upper end of the can 110.

A positive electrode terminal 130_1 electrically connected to the positive electrode and a negative electrode terminal 130_2 electrically connected to the negative electrode may be coupled to the cap plate 120. For example, the positive and negative electrode terminals 130_1 and 130_2 may be disposed to protrude outward through the cap plate 120.

A vent 140 may be provided on at least one side of the secondary battery 100. As shown in FIG. 2, the vent 140 may be disposed on the top surface of the secondary battery 100, i.e., the cap plate 120. The vent 140 may be configured to open in an event that an internal pressure above a predetermined threshold pressure occurs in the secondary battery 100. The threshold pressure set in advance to prevent explosion and overheating of the secondary battery 100 may be a breaking pressure of the vent 140 caused by the internal pressure in the secondary battery 100.

The vent 140 may be disposed to seal a peripheral portion of the vent hole of the cap plate 120, and may include an adhesive portion 142 in which an adhesive is applied to a portion corresponding to the periphery (e.g., peripheral portion) of the vent hole of the cap plate 120. The adhesive portion of the vent 140 may be attached to the peripheral portion of the vent hole of the cap plate 120. As a result, if the internal pressure of the secondary battery 100 is greater than the breaking pressure of the vent 140, the adhesive portion 142 of the vent 140 may break or be detached from the vent hole to release the internal pressure of the secondary battery 100.

The secondary battery 100 may be a lithium battery cell, a sodium battery cell, or the like. However, the scope of the present disclosure is not limited thereto, and the secondary battery 100 may include any battery capable of repeatedly providing electricity by charging and discharging. In an embodiment, in a case where the secondary battery 100 is a lithium secondary battery, the lithium secondary battery 100 may be used in an electric vehicle (EV) due to excellent life characteristics and high rate characteristics. The secondary battery 100 may also be used in a hybrid vehicle such as a plug-in hybrid electric vehicle (PHEV). Lithium secondary batteries may be used in applications requiring large amounts of power storage. For example, lithium secondary batteries may be used in electric bicycles, power tools, and the like.

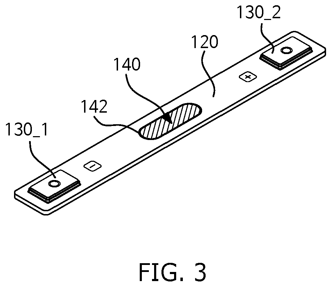

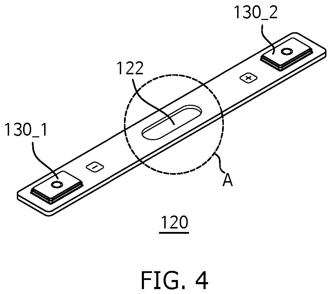

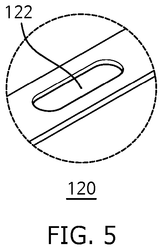

FIG. 3 illustrates a perspective view showing a cap plate in which a vent is disposed according to embodiments of the present disclosure. FIG. 4 illustrates a perspective view showing a cap plate according to embodiments of the present disclosure. FIG. 5 illustrates an enlarged perspective view showing part A in FIG. 4.

Referring to FIGS. 3 through 5, the cap plate 120 may have a vent hole 122 provided therein to release the internal pressure of the secondary battery 100. The vent 140 may be disposed in the vent hole 122 of the cap plate 120. The vent 140 may have an adhesive portion 142 to which an adhesive is applied. The adhesive portion 142 may be provided on a portion corresponding to the periphery of the vent hole 122 of the cap plate 120.

According to some embodiments, the vent 140 may be disposed on the surface of the upper end of the cap plate 120 surrounding the vent hole 122 of the cap plate 120. The vent 140 may be disposed to seal the vent hole 122 of the cap plate 120 and the peripheral portion of the vent hole 122. The center of the vent 140 may correspond to the center of the vent hole 122 of the cap plate 120. In addition, the vent 140 and the vent hole 122 may have an elliptical shape. Accordingly, the internal pressure of the secondary battery 100 may be concentrated at the center of the vent 140. Due to these structural features, the internal pressure of the secondary battery 100 may be uniformly applied to the adhesive portion 142 of the vent 140, such that in a case where the internal pressure of the secondary battery 100 is greater than or equal to the fracture pressure of the vent 140, the vent 140 may appropriately break or be detached from the cap plate 120.

In the secondary battery including the cap plate 120 having the above-described configuration, the vent 140 attached to the vent hole 122 provided on the cap plate 120 may be caused to break or be detached by the internal pressure of the secondary battery, thereby preventing explosion and ignition of the secondary battery.

Referring to FIG. 4, the vent hole 122 of the cap plate 120 may be provided in the central portion of the cap plate 120. The central portion of the cap plate 120 may be positioned at the central portion of the length and width of the cap plate 120. As a result, the internal pressure of the secondary battery 100 may be concentrated at the vent hole 122 of the cap plate 120.

According to some embodiments, the vent hole 122 may be configured to have a symmetrical structure to uniformly release the internal pressure of the secondary battery 100. The shape of the vent hole 122 may be symmetrical with respect to the longitudinal direction of the cap plate 120, and may be symmetrical with respect to the transverse direction of the cap plate 120. For example, the shape of the vent hole 122 may include one of circular, oval, and prismatic shapes.

According to some embodiments, the shape of the vent hole 122 of the cap plate 120 may be configured to be elliptical. Specifically, the long axis of the vent hole 122 may be formed in the longitudinal direction of the cap plate 120, and the short axis may be formed in the transverse direction of the cap plate 120. The long axis of the vent hole 122 may be smaller than the length between the electrode terminals 130_1 and 130_2 of the cap plate 120, and the short axis of the vent hole 122 may be smaller than the length of the width of the cap plate 120.

According to some embodiments, the vent hole 122 may be shaped such that a rectangle connects halves of a circle (hereinafter, referred to as "semicircles") cut in the transverse direction of the cap plate 120, in the longitudinal direction of the cap plate 120. The rectangle connecting the semicircles may include a rectangle or a square. The length of opposite sides of the rectangle connecting the semicircles may be equal to the diameter of the semicircles.

According to some embodiments, the shape of the vent hole 122 may be configured such that a rectangle connects the semicircles cut in the transverse direction of the cap plate 120, in the longitudinal direction of the cap plate 120. The area of the vent hole 122 may vary depending on the length of the rectangles in the longitudinal direction of the cap plate 120. Accordingly, the length of the rectangle in the longitudinal direction of the cap plate 120 may be set by considering the breaking pressure of the vent 140.

According to some embodiments, the area of the vent hole 122 may be smaller than the area of the cap plate 120. In addition, in the longitudinal direction of the cap plate 120, the length of the vent hole 122 may be smaller than the length between the electrode terminals 130_1 and 130_2 of the cap plate 120. In the transverse direction of the cap plate 120, the length of the vent hole 122 may be smaller than the length of the width of the cap plate 120.

However, the shape and area of the vent hole 122 are not limited to the embodiments of FIGS. 3 through 5, and the vent hole 122 may have a variety of shapes and areas.

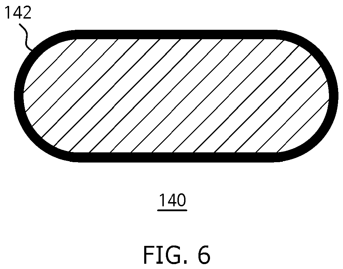

FIG. 6 illustrates a plan view showing a vent according to embodiments of the present disclosure.

Referring to FIG. 6, the vent 140 may include an adhesive portion 142 in which an adhesive is applied to a band-shaped region surrounding the outermost portion. The portion of the vent 140 other than the adhesive portion 142 may have a size or shape corresponding to that of the vent hole 122 of the cap plate 120.

As the internal pressure of the secondary battery 100, including the cap plate 120 to which the vent 140 is attached, increases, the internal temperature of the secondary battery 100 may increase to about 200 °C. If the internal pressure of the secondary battery 100 is greater than or equal to the breaking pressure of the vent 140, the adhesive portion 142 of the vent 140 may break or be detached from the vent hole 122 of the cap plate 120, thereby releasing the internal pressure of the secondary battery 100. Accordingly, the material or physical properties of the vent 140 may be configured such that the vent 140 does not break before the internal pressure of the secondary battery 100 reaches the breaking pressure of the vent 140.

According to some embodiments, the vent 140 may include a material having high heat resistance. A high temperature resistant material may be a material that is capable of maintaining its physical and chemical properties at elevated temperatures, and may be heat resistant so as not to break at an internal temperature of about 200 °C, which can be the internal temperature of the secondary battery 100. For example, the high temperature resistant material may include at least one of ceramics, super alloys, heat resistant steels, carbon materials, carbon composites, and specialty plastics. In a case where the vent 140 is formed using a high heat resistant material having such properties, the vent 140 may not break even if the internal temperature of the secondary battery 100 increases to about 200 °C before the internal pressure of the secondary battery 100 reaches the breaking pressure of the vent 140.

According to some embodiments, the vent 140 may include a resin material. The resin material can be a polymeric material that may have a variety of shapes and properties. The resin material may be heat resistant so as not to break at an internal temperature of the secondary battery 100 of about 200 °C. In addition, the resin material may be easily molded into an intended shape, and has a lower unit cost than a metal material, thereby reducing the manufacturing cost of the vent 140.

With respect to the heat resistance described above, the resin material may include a high heat resistant material. Further, the resin material having high heat resistance may include one of polyimide (PI), polytetrafluoroethylene (PTFE), polypropylene (PP), polyphenylene sulfide (PPS), and mixtures thereof.

According to some embodiments, the vent 140 may be configured to have a symmetrical structure to evenly receive the internal pressure of the secondary battery 100. The shape of the vent 140 may be symmetrical with respect to the longitudinal direction of the cap plate 120, and may be symmetrical with respect to the transverse direction of the cap plate 120. For example, the shape of the vent 140 may include one of circular, oval, and prismatic shapes.

According to some embodiments, the shape of the vent 140 may be elliptical. Specifically, in a case where the vent hole 122 is elliptical, the long axis of the vent 140 may be longer than the length of the long axis of the vent hole 122, and the short axis of the vent 140 may be longer than the length of the short axis of the vent hole 122. In addition, the long axis of the vent 140 may be shorter than the length between the electrode terminals of the cap plate 120, and the short axis of the vent 140 may be shorter than the width of the cap plate 120.

According to some embodiments, the shape of the vent 140 may be configured such that a rectangle connects semicircles. The rectangle connecting the semicircles may include a rectangle or a square. The length of opposite sides of the rectangle connecting the semicircles may be equal to the diameter of the semicircles.

According to some embodiments, as described herein, the shape of the vent 140 may be configured such that a rectangle connects semicircles. The area of the vent 140 may vary depending on the length of the rectangle in a direction perpendicular to the direction in which the circle is cut. Therefore, the length of the rectangle in the direction perpendicular to the direction in which the circle is cut may be set by considering the breaking pressure of the vent 140. Due to such a characteristic structure, the vent 140 or the vent 140 without the adhesive portion 142 may be shaped to be disposed on the periphery of the vent hole 122 to correspond to the shape of the vent hole 122 of the cap plate 120.

According to some embodiments, the area of the vent 140 may be greater than the area of the vent hole 122 of the cap plate 120. The area of the region excluding the adhesive portion 142 of the vent 140 may be substantially equal to the area of the vent hole 122 of the cap plate 120. In addition, in the longitudinal direction of the cap plate 120, the length of the vent 140 may be greater than the length of the vent hole 122. In the transverse direction of the cap plate 120, the length of the vent 140 may be greater than the length of the vent hole 122. Accordingly, the vent 140 may be positioned to seal the vent hole 122 by attaching or airtightly fixing the adhesive portion 142 of the vent 140 to the periphery of the vent hole 122.

According to some embodiments, the area of the vent 140 may be smaller than the area of the cap plate 120. In addition, in the longitudinal direction of the cap plate 120, the length of the vent hole 122 may be smaller than the length between the electrode terminals 130_1 and 130_2 of the cap plate 120. In the transverse direction of the cap plate 120, the length of the vent hole 122 may be smaller than the length of the width of the cap plate 120. Accordingly, attaching or fixing the adhesive portion 142 of the vent 140 to the top surface of the cap plate 120 may allow the vent 140 to appropriately break or be detached from the cap plate 120.

According to some embodiments, the vent 140 may have an adhesive portion 142 to which an adhesive is applied. In particular, the adhesive may include an acrylic adhesive. The acrylic adhesive may be based on an acrylic polymer and may have strong adhesion. In a case where the vent 140 is made of a resin material, the adhesive portion 142 may be configured as an acrylic adhesive capable of providing strong adhesion to the surface of the resin material. As a result, if the internal pressure of the secondary battery 100 is lower than the breaking pressure of the vent 140, the vent 140 may not break or be detached from the cap plate 120.

According to some embodiments, the shape of the adhesive portion 142 of the vent 140 may be configured to be annular. The annular shape may have a cavity in the central portion, and may have circular or elliptical outer and inner boundaries. The annular shape may have a width equal to the difference between the outer and inner boundaries. In addition, the adhesive portion 142 may be provided in a region adjacent to an edge of the vent 140. Accordingly, the outer boundaries of the adhesive portion 142 may be positioned flush with or further inward than the edges of the vent 140. In addition, the inner boundaries of the adhesive portion 142 may be shaped to be spaced apart a predetermined distance from the outer boundaries. Accordingly, the adhesive portion 142 of the vent 140 may appropriately break or be detached from the cap plate 120 in response to the internal pressure of the secondary battery 100 uniformly applied thereto.

The breaking pressure of the vent 140 may be greater than or equal to 10 kgf/cm². According to some embodiments, the breaking pressure of the vent 140 may be from 10 kgf/cm² to 30 kgf/cm². The breaking pressure of the vent 140 may be set differently depending on the size and shape of the secondary battery 100. Accordingly, the area of the adhesive portion 142 of the vent 140 may be set considering the breaking pressure of the vent 140. The greater the breaking pressure of the vent 140, the greater the area or width of the adhesive portion 142 may be. The smaller the breaking pressure of the vent 140, the smaller the area or width of the adhesive portion 142 may be.

However, the shape and area of the vent 140 are not limited to the depicted embodiment of FIG. 6, and the vent 140 may have a variety of shapes and areas.

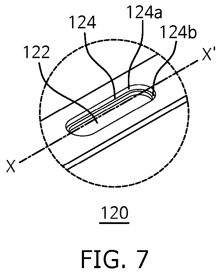

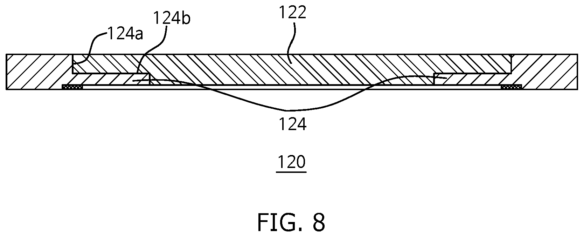

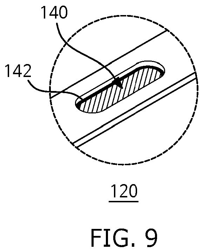

FIG. 7 illustrates a perspective view showing a vent hole having a stepped portion according to embodiments of the present disclosure. FIG. 8 illustrates a cross-section of the vent hole shown in FIG. 7 taken along line X-X'. FIG. 9 illustrates a perspective view showing a cap plate in which a vent is disposed on a stepped portion of a vent hole according to embodiments of the present disclosure.

Referring to FIGS. 7 through 9, the vent hole 122 of the cap plate 120 may have a stepped portion 124 configured to seat the adhesive portion 142 of the vent 140 thereon (e.g., the stepped portion may be configured to have the adhesive portion seated thereon). According to some embodiments, the stepped portion 124 of the vent hole 122 may have a first surface 124a connected to the upper end surface of the cap plate 120 surrounding the vent hole 122 and perpendicular to the upper end surface and a second surface 124b parallel to the upper end surface of the cap plate 120 and connected to the first surface 124a.

The vent hole 122 may include a first vent hole positioned inside the first surface 124a of the stepped portion 124 and a second vent hole positioned downstream of the first vent hole and on an inner circumferential surface of the second surface 124b of the stepped portion 124. The shape of the first vent hole may correspond to the shape of the first surface 124a of the stepped portion 124. Thus, the area of the first vent hole may be determined by the area of the region defined by the first surface 124a of the stepped portion 124. In addition, the shape of the second vent hole may correspond to the shape of the first vent hole. Accordingly, the area of the second vent hole may be determined according to the area of the region defined by the inner circumferential surface of the second surface 124b of the stepped portion 124. The area of the second surface 124b of the stepped portion 124 may be set by considering the area of the adhesive portion 142 of the vent 140 and/or the breaking pressure of the vent 140.

According to some embodiments, the stepped portion 124 of the vent hole 122 may form a stepped portion having a constant length. Accordingly, the area of the second vent hole may be smaller than the area of the first vent hole, and the shape of the second vent hole may correspond to the shape of the first vent hole. Accordingly, the adhesive portion 142 of the vent 140 may be uniformly attached to the second surface 124b of the stepped portion 124, and may appropriately break or be detached from the second surface 124b as the internal pressure of the secondary battery increases to the breaking pressure.

According to some embodiments, the area of the second surface 124b of the stepped portion 124 may be greater than or equal to the area of the adhesive portion 142 of the vent 140. In addition, the shape of the second surface 124b of the stepped portion 124 may correspond to the shape of the adhesive portion 142 of the vent 140. Specifically, the shape of the second surface 124b of the stepped portion 124 may be annular. The annular shape may have a cavity in the central portion, and may have circular or elliptical outer and inner boundaries. The annular shape may have a width equal to the difference between the outer and inner boundaries. The outer boundaries of the second surface 124b may be shaped like the edges of the vent hole 122, and the inner boundaries of the second surface 124b may be spaced apart a predetermined distance from the outer boundaries. Accordingly, the adhesive portion 142 of the vent 140 may be easily seated on and attached to the second surface 124b of the stepped portion 124.

According to some embodiments, the vent 140 may be disposed on the stepped portion 124 of the vent hole 122. Specifically, an adhesive portion 142 of the vent 140 may be attached to the second surface 124b of the stepped portion 124. The area of the vent 140 may be set such that the vent 140 is inserted into the vent hole 122.

According to some embodiments, the area of the vent 140 may be smaller than the area of the vent hole 122. In addition, in the longitudinal direction of the cap plate 120, the length of the vent 140 may be smaller than the length of the vent hole 122. In the transverse direction of the cap plate 120, the length of the vent 140 may be smaller than the length of the vent hole 122. Accordingly, the vent 140 may be inserted into the vent hole 122 such that the adhesive portion 142 of the vent 140 may be seated on and attached to the step portion 124.

According to some embodiments, in a case where the vent 140 has a smaller area, the vent 140 may be more easily inserted into the vent hole 122. As the area of the vent 140 decreases, the area of the adhesive portion 142 of the vent 140 may also decrease. The adhesive portion 142 may be applied by adding an adhesive toward the inner boundaries of the adhesive portion 142 to supplement the adhesive force. Accordingly, the area of the stepped portion 124 of the vent hole 122 may be increased to correspond to the area of the adhesive portion 142.

Referring to FIG. 9, a vent 140 may be inserted into the vent hole 122 and may be seated on the stepped portion 124. The top surface of the vent 140 may be lower than the top surface of the cap plate 120 surrounding the vent hole 122. Accordingly, the vent 140 may not protrude beyond the exterior of the secondary battery 100, thereby preventing damage to the vent 140 from the exterior of the secondary battery 100. As a result of this characteristic structure, the vent 140 may only break or be detached only if the internal pressure of the secondary battery 100 is greater than the breaking pressure of the vent 140, thereby fulfilling the function of the vent 140.

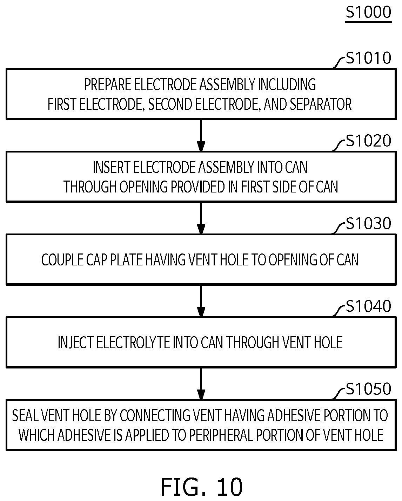

FIG. 10 illustrates a flowchart showing a method of fabricating a secondary battery according to embodiments of the present disclosure.

A method of fabricating a secondary battery (method S1000) may start by preparing an electrode assembly including a first electrode, a second electrode, and a separator (act S1010).

The electrode assembly may be inserted into the can through an opening provided in a first side of the can (act S1020).

In some embodiments, the can may be a prismatic can. In some embodiments, the cap plate may be coupled to the opening in the can to seal the can. In some embodiments, the can and the cap plate may be made of a conductive material.

In addition, a cap plate having a vent hole may be coupled to the opening of the can (act S1030).

In some embodiments, the vent hole may be formed in the central portion of the cap plate. In some embodiments, the vent hole may be shaped such that a rectangle is positioned between and connected to semicircles cut in the transverse direction of the cap plate, in the longitudinal direction of the cap plate. In some embodiments, the area of the vent hole may be smaller than the area of the cap plate. Specifically, in the longitudinal direction of the cap plate, the length of the vent hole may be smaller than the length between the electrode terminals of the cap plate. In the transverse direction of the cap plate, the length of the vent hole may be smaller than the width of the cap plate.

Thereafter, electrolyte may be injected into the can through the vent hole (act S1040).

Finally, the vent hole may be sealed by connecting a vent having an adhesive portion to which an adhesive is applied to the periphery of the vent hole (act S1050).

In some embodiments, the vent may include a heat resistant material. The heat resistant material may be heat resistant so as not to break at an internal temperature of the secondary battery of about 200 °C. In some embodiments, the heat resistant resin material may include one of polyimide (PI), polytetrafluoroethylene (PTFE), polypropylene (PP), polyphenylene sulfide (PPS), and mixtures thereof. Accordingly, the resin material may be easily molded into an intended shape, thereby allowing the vent to be manufactured in a variety of shapes, and has a lower unit cost than a metal material, thereby reducing the manufacturing cost of the vent.

In some embodiments, the shape of the vent may be configured such that a rectangle connects semicircles. In some embodiments, the area of the vent may be greater than the area of the vent hole in the cap plate and smaller than the area of the cap plate. In some embodiments, the adhesive applied to the adhesive portion may include an acrylic adhesive, and the shape of the adhesive portion may be configured to be annular. In some embodiments, the breaking pressure of the vent may be greater than or equal to 10 kgf/cm².

In some embodiments, the adhesive may include an acrylic adhesive. The acrylic adhesive is based on an acrylic polymer, and may have strong adhesion. In a case where the vent is made of a resin material, the adhesive portion may be configured as an acrylic adhesive capable of providing strong adhesion to the surface of the resin material.

As a comparative example of the present disclosure, a case in which a cap plate having an inlet is coupled to the opening of the can of a secondary battery and then electrolyte is injected into the can through the inlet may be considered. In this case, the vent or the vent hole may further be formed in the cap plate in a region spaced apart from the inlet, or may be formed on the opposite side of the can to which the cap plate is coupled. In a comparative example, the inlet may be sealed by a sealing pin after the electrolyte has been injected, independently of the attachment or assembly process of the vent provided on the case or the cap plate. In this case, the process of sealing the inlet with the sealing pin may cause a defect in the cap plate.

According to some embodiments, after the cap plate with the vent hole formed therein is coupled to the opening of the can, electrolyte may be injected into the can through the vent hole. As a result, the processing to form the inlet described above may be eliminated, thereby reducing the cost of processing the cap plate. The process of sealing the inlet with a sealing pin may also be eliminated, thereby reducing occurrences of a defect in the cap plate.

The flowchart of FIG. 10 and the above description are only illustrative of the present disclosure, and the scope of the present disclosure is not limited thereto. For example, one or more of the steps in the flowchart and above description may be added/altered/deleted, the order of one or more of the steps may be changed, and one or more of the steps may be performed simultaneously.

Although the present disclosure has been described above with respect to embodiments thereof, the present disclosure is not limited thereto. Various modifications and variations can be made thereto by those skilled in the art within the scope of the present disclosure and the equivalent scope of the appended claims.

## Claims

1. A secondary battery (100) comprising:
an electrode assembly (10);
a can (110) configured to accommodate the electrode assembly (10);
a cap plate (120) coupled to a first side of the can (110) and having a vent hole (122); and
a vent (140) configured to seal a peripheral portion of the vent hole (122) and comprising an adhesive portion (142) comprising an adhesive applied to a portion corresponding to the peripheral portion of the vent hole (122).

2. The secondary battery (100) of claim 1, wherein the vent (140) comprises a resin material.

3. The secondary battery (100) of claim 2, wherein the resin material comprises one of polyimide, polytetrafluoroethylene, polypropylene, polyphenylene sulfide, and mixtures thereof.

4. The secondary battery (100) of any one of claims 1 to 3, wherein the vent hole (122) has an elliptical shape.

5. The secondary battery (100) of any one of claims 1 to 4, wherein the adhesive portion 142 has an annular shape.

6. The secondary battery (100) of any one of claims 1 to 5, wherein the adhesive comprises an acrylic adhesive.

7. The secondary battery (100) of any one of claims 1 to 6, wherein the vent (140) has a breaking pressure of 10 kgf/cm² to 30 kgf/cm².

8. The secondary battery (100) of any one of claims 1 to 7, wherein the vent (140) has an elliptical shape.

9. The secondary battery (100) of any one of claims 1 to 8, wherein the vent (140) is disposed on an upper end surface of the cap plate (120) surrounding the vent hole (122).

10. The secondary battery (100) of any one of claims 1 to 8, wherein the vent hole (122) comprises a stepped portion (124) configured to have the adhesive portion (142) of the vent (140) seated thereon.

11. The secondary battery (100) of claim 10, wherein the stepped portion (124) comprises:
a first surface (124a) connected to an upper end surface of the cap plate (120) surrounding the vent hole (122) and provided perpendicular to the upper end surface; and
a second surface (124b) provided parallel to the upper end surface of the cap plate (120) and connected to the first surface (124a).

12. The secondary battery (100) of claim 10 or claim 11, wherein the stepped portion (124) has a shape corresponding to a shape of the vent hole (122).

13. The secondary battery (100) of claim 11 or claim 12, wherein an area of the second surface (124b) of the stepped portion (124) is greater than or equal to an area of the adhesive portion (142) of the vent (140).

14. The secondary battery (100) of any one of claims 1 to 13, wherein a center of the vent (140) corresponds to a center of the vent hole (122).

15. A method of fabricating a secondary battery (100), the method comprising:
preparing an electrode assembly (10) comprising a first electrode, a second electrode, and a separator;
inserting the electrode assembly (10) into a can (110) through an opening provided in a first side of the can (110);
coupling a cap plate (120) having a vent hole (122) to the opening of the can (110);
injecting electrolyte into the can (110) through the vent hole (122); and
sealing the vent hole (122) by connecting a vent (140) having an adhesive portion (142) to which an adhesive is applied to a peripheral portion of the vent hole (122).
